# EUROPEAN PATENT APPLICATION

(11) **EP 4 254 632 A1**
(43) Date of publication of application: **04.10.2023**
(21) Application number: 22817059.3
(22) Date of filing: 31.10.2022
(51) Int. Cl.: H01M 50/342, H01M 50/645, H01M 50/152, H01M 50/184, H01M 50/186

(54) **BATTERY COVER PLATE ASSEMBLY, CYLINDRICAL BATTERY, AND BATTERY PACK**

(30) Priority: 10.02.2022 CN 202220271644 U
(71) Applicant: Eve Power Co., Ltd., Jingmen, Hubei 448000 (CN)
(72) Inventor: MIN, Changfei, Jingmen, Hubei 448000 (CN); ZHAO, He, Jingmen, Hubei 448000 (CN); HUANG, Liming, Jingmen, Hubei 448000 (CN); XU, Yuebin, Jingmen, Hubei 448000 (CN); HE, Wei, Jingmen, Hubei 448000 (CN)
(74) Representative: De Arpe Tejero, Manuel
(86) International application number: PCT/CN2022/128514
(87) International publication number: WO 2023/151320

(57) **Abstract**

The present application discloses a cap assembly of a battery, a cylindrical battery, and a battery pack. The battery pack includes multiple cylindrical batteries. The cylindrical battery includes a cylindrical shell defining an opening and a cap assembly covering the opening. The cap assembly includes a cap, a pole, a terminal, and a sealing pin. The cap defines a liquid injection hole. The pole is disposed on a first side of the cap. The terminal is disposed on a second side of the cap and electrically connected to the pole. The second side of the cap is opposite to the first side of the cap. The sealing pin is configured to seal the liquid injection hole, and has a thinning region configured for an explosion-proof function.

## Description

This application claims foreign priority to Chinese Patent Application No. 202220271644.4, filed on February 10, 2022, the content of which is herein incorporated by reference in its entirety.

### TECHNICAL FIELD

The present disclosure relates to the field of battery technologies, for example, to a cap assembly of a battery, a cylindrical battery, and a battery pack.

### BACKGROUND

For a cylindrical battery having an aluminum case, it is necessary to define a liquid injection hole on one of two caps at opposite ends of the battery for a liquid injection process. Besides, it is also necessary to define a mounting hole on one of two caps to mount an explosion-proof valve. The explosion-proof valve is configured to be firstly cracked when the battery fails, in order to relieve a pressure of the battery and ensure the safety of the battery.

In the related art, during the production of the cylindrical battery, one way for arranging the liquid injection hole and the explosion-proof valve is to arrange the liquid injection hole and the explosion-proof valve on the same cap of the battery. In this case, due to a limited area of the cap, the above arrangement limits a diameter of the liquid injection hole, and the liquid injection hole having a smaller size not only is inconvenient for processing, but also affects the liquid injection process. Another way is to define the liquid injection hole on one of the caps at one end of the battery, and arrange the explosion-proof valve on the other of the caps at the other end of the battery. In this case, the two caps are needed to be defined with holes, respectively, which is cumbersome and costly in manufacturing.

### SUMMARY

The present disclosure provides a cap assembly of a battery, a cylindrical battery, and a battery pack, which have a simple manufacturing process, a high production efficiency, few parts, a low cost, and can ensure that the liquid injection hole has a diameter large enough, and can make the liquid injection process stable.

In a first aspect, a cap assembly of a battery is provided in some embodiments of the present disclosure. The cap assembly includes a cap, defining a liquid injection hole; a pole, disposed on a first side of the cap; a terminal, disposed on a second side of the cap and electrically connected to the pole. The second side of the cap is opposite to the first side of the cap; and a sealing pin, configured to seal the liquid injection hole, and having a thinning region configured for an explosion-proof function.

In some embodiments, a thickness of the thinning region is less than or equal to 0.2mm.

In some embodiments, the sealing pin defines a notch, and a position of the sealing pin corresponding to the notch forms the thinning region.

In some embodiments, the sealing pin defines two notches, and the two notches are intersected with each other.

In some embodiments, the sealing pin further defines a recess, the recess is located at one of two opposite sides of the sealing pin, the notch is located at the other of two opposite sides of the sealing pin, and the recess is disposed directly opposite to the notch.

In some embodiments, the liquid injection hole is a stepped hole, one end of the stepped hole having a greater diameter faces the second side of the cap, and the sealing pin is sealed to the end of the stepped hole having a greater diameter.

In some embodiments, an inner wall surface at the end of the stepped hole having a greater diameter is a tapered surface, a diameter of the tapered surface gradually decreases along a direction from the second side of the cap to the first side of the cap, and a peripheral wall surface of the sealing pin is a tapered face.

In some embodiments, the sealing pin is welded to a hole wall of the liquid injection hole.

In some embodiments, the cap defines a mounting hole, and the cap assembly of the battery further includes: an upper plastic member, disposed between the cap and the terminal; a lower plastic member, disposed between the pole and the cap; and a sealing ring, disposed in the mounting hole and abutting against both the upper plastic member and the lower plastic member. The pole successively runs through the lower plastic member, the sealing ring, and the upper plastic member, and is further connected to the terminal.

In some embodiments, the lower plastic member defines an avoidance hole at a position opposite to the liquid injection hole, and the avoidance hole has a diameter less than or equal to that of the liquid injection hole.

In some embodiments, the terminal defines a limiting groove at one end away from the cap, a first end of the pole close to the first side of the cap is arranged with a first flange, a second end of the pole close to the second side of the cap is arranged with a second flange, the first flange abuts against the lower plastic member, and the second flange is engaged into the limiting groove.

In some embodiments, one of a side wall of the upper plastic member facing the terminal and a side wall of the terminal facing the upper plastic member is arranged with a positioning protrusion, the other of the side wall of the upper plastic member facing the terminal and the side wall of the terminal facing the upper plastic member defines a positioning groove, and the positioning protrusion is engaged with the positioning groove.

In some embodiments, one of a side wall of the upper plastic member facing the cap and a side wall of the cap facing the upper plastic member is arranged with a protruding portion, the other of the side wall of the upper plastic member facing the cap and the side wall of the cap facing the upper plastic member defines a groove portion, and the protruding portion is engaged with the groove portion.

In some embodiments, the cap assembly further includes a current collector. A first end of the current collector is arranged to be connected to a cell, and a second end of the current collector is electrically connected to the pole; the second end of the current collector is sandwiched between the lower plastic member and the pole and defines a through hole, and the pole runs through the through hole.

In a second aspect, a cylindrical battery is provided in some embodiments of the present disclosure. The cylindrical battery includes a cylindrical shell, defining an opening; and a cap assembly as previously described. The cap assembly is configured to cover and seal the opening.

In a third aspect, a battery pack is provided in some embodiments of the present disclosure. The battery pack includes a plurality of cylindrical batteries as previously described.

The technical effects of some embodiments the present disclosure include the following.

The cap assembly of the battery according to some embodiments, by setting the thinning area on the sealing pin configured to seal the liquid injection hole, the sealing pin may have a function of an explosion-proof valve. On one hand, it's unnecessary to additionally arrange an explosion-proof valve on the cap assembly, which reduces the number of components, thereby reducing cost and improving a production efficiency of the cap assembly. On the other hand, it's unnecessary to additionally define a mounting hole on the cap to mount the explosion-proof valve, which can not only further improve the production efficiency of the cap assembly, but also leave a large arrangement space for the liquid injection hole on the cap, such that the liquid injection hole has a diameter large enough, thereby ensuring the stability of the liquid injection process.

The cylindrical battery of the present embodiment, by arranging the cap assembly of the battery as described above, has a simple manufacturing process, a high production efficiency, and a low cost, and the liquid injection process has a good stability, thereby ensuring a good performance.

The battery pack of the present embodiment, by setting the cylindrical battery as described above, has a high production efficiency, a low cost, and a good performance.

### BRIEF DESCRIPTION OF THE DRAWINGS

FIG. 1 is an exploded view of a cap assembly of a battery according to an embodiment of the present disclosure.
FIG. 2 is a cross-sectional view of the cap assembly of the battery according to an embodiment of the present disclosure.
FIG. 3 is a cross-sectional view of a cap according to an embodiment of the present disclosure.
FIG. 4 is an enlarged view of the A portion shown in FIG. 2.
FIG. 5 is a schematic structural view of a sealing pin according to an embodiment of the present disclosure.
FIG. 6 is a schematic structural view of a cylindrical battery according to an embodiment of the present disclosure.

In the drawings:
1-cap; 11-liquid injection hole; 12-mounting hole; 13-groove portion; 2-pole; 21-first flange; 22-second flange; 3-terminal; 31-limiting groove; 32-positioning groove; 4-sealing pin; 41-notch; 42-recess; 5-upper plastic member; 51-protruding portion; 52-positioning protrusion; 6-lower plastic member; 61-avoidance hole; 62-avoidance groove; 7-sealing ring; 8- current collector; 81-through hole; 10-shell; 20-opening; 30-cell.

### DETAILED DESCRIPTION

In the description of the present disclosure, unless specified and limited, otherwise, terms "mounted", "coupled", "connected" shall be interpreted broadly, such as fixed connection, detachable connection, or integrally connected; mechanical connection, electrical connection; direct connection, indirect connection via an intermediate medium, or communication between inner spaces of two elements. Any ordinary skilled person in the art shall understand a specific meaning of the above terms in the context of the present disclosure based on specific cases.

In the present disclosure, unless specified and limited, otherwise, a first feature being "above" or "below" a second features may include that the first feature directly contacts with the second feature, and may also include that the first feature does not directly contact with the second feature but contacts with the second feature through additional feature between the first feature and the second feature. Moreover, the first feature being "above", "on", and "on top of' the second feature includes the first feature being directly above and diagonally above the second feature, or indicates that a horizontal height of the first feature is higher than a horizontal height of the second feature. The first feature being "below", "under", and "beneath" the second feature includes the first feature being directly below and diagonally below the second feature, or indicates that a horizontal height of the first feature is lower than a horizontal height of the second feature.

In the description of the present disclosure, orientations or positional relationships indicated by terms "up", "down", "left", "right", etc. are based on the orientations or position relationships shown in the accompanying drawings, and are only for the convenience of describing the present disclosure and simplifying the description, rather than implying or indicating that the device or the component referred to must have a particular orientation or constructed and operated in a particular orientation, and thus these terms cannot be understood as limiting the present disclosure. In addition, terms "first" and "second" are only used for distinguishing in description and have no special meaning.

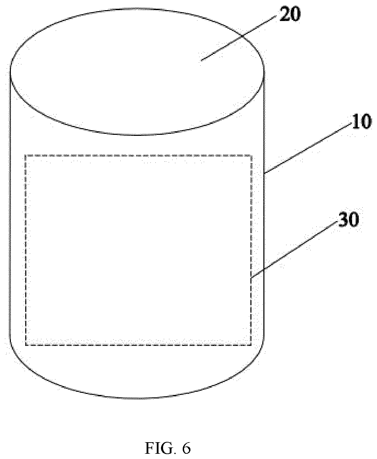

In an embodiment of the present disclosure, a cap assembly of a battery, a cylindrical battery, and a battery pack are provided. As shown in FIG. 6, the battery pack includes a plurality of cylindrical batteries. The cylindrical battery includes a cylindrical shell 10, a cell 30, and a cap assembly. An opening 20 is defined at one end face of the shell 10, and the cell 30 is able to be put or placed into the shell 10 from the opening. The cap assembly is configured to cover and seal the opening of the housing 20. It should be noted that, in some embodiments, an inner side and an outer side are described with reference to the cylindrical battery. A side of the cap assembly facing an interior of the shell 10 is referred as the "inner side", and a side of the cap assembly facing an exterior of the shell 10 is referred as the "outer side".

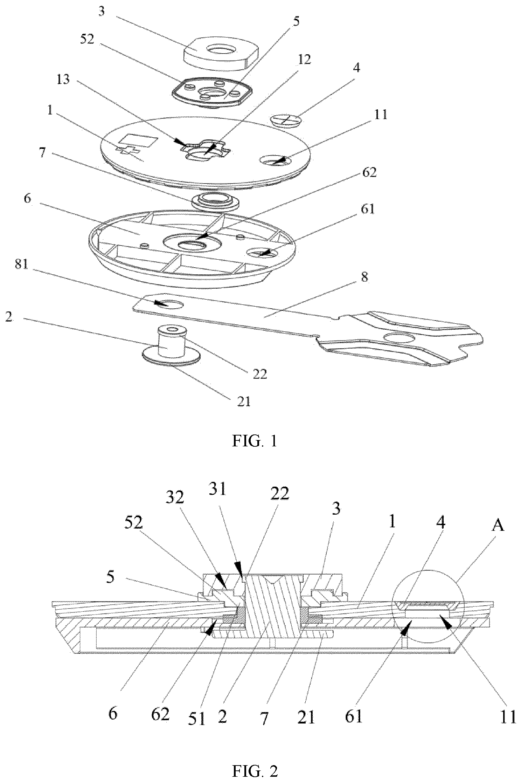

As shown in FIGS. 1 and 2, the cap assembly of the battery includes a cap 1, a pole 2, and a terminal 3. The cap 1 is arranged to block the opening at the end of the shell. The pole 2 is disposed on a first side of the cap 1, and the first side of the cap 1 is the inner side of the cap 1. The pole 2 is electrically connected to the cell inside the shell. The terminal 3 is disposed on a second side of the cap 1, and the second side of the cap 1 is the outer side of the cap 1. The pole 2 is further is electrically connected to the terminal 3. The terminal 3 is arranged to be connected to an external load. In this way, it is possible to realize the electrical connection between the cell and the external load outside the cylindrical battery. In some embodiments, the cap 1 is in shape of substantially a circle.

Exemplarily, as shown in FIGS. 1-3, a mounting hole 12 is defined in the cap 1. The mounting hole 12 penetrates through the cap 1. The cap assembly of the battery further includes an upper plastic member 5, a lower plastic member 6, and a sealing ring 7. The upper plastic member 5 is arranged on the outer side of the cap 1 and located between the cap 1 and the terminal 3. The lower plastic member 6 is arranged on the inner side of the cap 1 and located between the pole 2 and the cap 1. The sealing ring 7 is arranged in the mounting hole 12 and abuts against the upper plastic member 5 and the lower plastic member 6, respectively. The pole 2 successively runs through the lower plastic member 6, the sealing ring 7, and the upper plastic member 5, and is further connected to the terminal 3. The arrangement of the upper plastic member 5, the sealing ring 7, and the lower plastic member 6 not only insulates the pole 2 from the cap 1, but also provides a sealing between the pole 2 and the cap 1.

Exemplarily, as shown in FIG. 2, a limiting groove 31 is defined at a first end of the terminal 3 away from the cap 1. An end of the pole 2 is located on the inner side of the cap 1 and arranged with a first flange 21. A second flange 22 is disposed at a second end of the terminal 3. The first flange 21 abuts against the lower plastic member 6, and the second flange 22 is engaged in the limiting groove 31. By using the cooperation between the first flange at one of two opposite ends of the pole 2 and the lower plastic member 6, and using the cooperation between the second flange at the other of two opposite ends of the pole 2 and the limiting groove 31 defined in the terminal 3, respectively, the connection of the cap 1 assembly is more firmly.

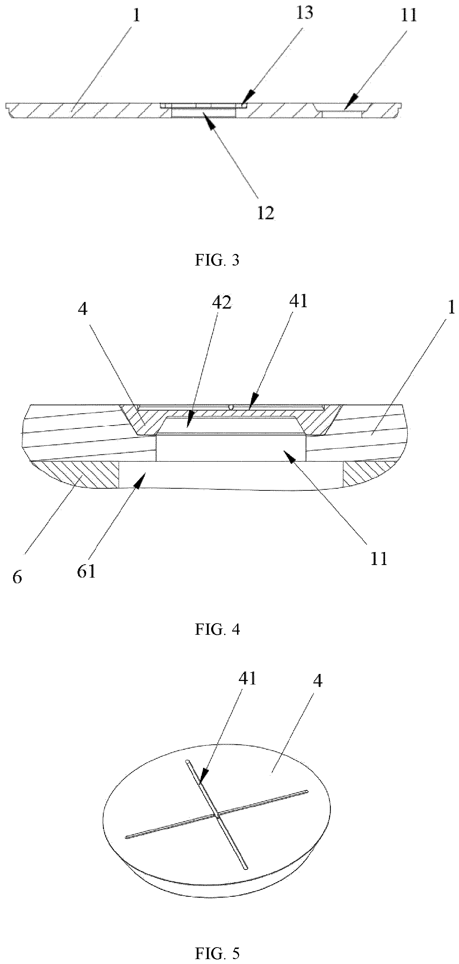

Exemplarily, as shown in FIG. 2, one of a side wall of the upper plastic member 5 facing the cap 1 and a side wall of the cap 1 facing the upper plastic member 5 is arranged with a protruding portion 51, and the other of the side wall of the upper plastic member 5 facing the cap 1 and the side wall of the cap 1 facing the upper plastic member 5 defines a groove portion 13. The protruding portion 51 is engaged with the groove portion 13. By the engagement of the groove portion 13 with the protruding portion 51, it is possible not only to position a position of the upper plastic member 5 relative to the cap 1, but also prevent the upper plastic member 5 from being twisted relative to the cap 1. In the present embodiment, as shown in FIGS. 2 and 3, the protruding portion 51 is disposed on the side wall of the upper plastic member 5 facing the cap 1, and the groove portion 13 is defined on the side wall of the cap 1 facing the upper plastic member 5. Exemplarily, as shown in FIGS. 1 and 3, the groove portion 13 is arranged coaxially with the mounting hole 12, but the groove portion 13 is a non-circular groove, thereby better preventing the upper plastic member 5 from being twisted relative to the cap 1. In other embodiments, the position of the protruding portion 51 may be interchangeable with the position of the groove portion 13.

Exemplarily, one of a side wall of the upper plastic member 5 facing the terminal 3 and a side wall of the terminal 3 facing the upper plastic member 5 is arranged with a positioning protrusion 52, and the other of the side wall of the upper plastic member 5 facing the terminal 3 and the side wall of the terminal 3 facing the upper plastic member 5 defines a positioning groove 32. The positioning protrusion 52 is engaged with the positioning groove 32, to achieve the positioning between the terminal 3 and the upper plastic member 5, and prevent the terminal 3 from being twisted relative to the upper plastic member 5. In the present embodiment, as shown in FIG. 2, the positioning protrusion 52 is disposed on the side wall of the upper plastic member 5 facing the terminal 3, and the positioning groove 32 is defined on the side wall of the terminal 3 facing the upper plastic member 5. However, in other embodiments, the position of the positioning protrusion 52 may be interchangeable with the position of the positioning groove 32. Exemplarily, as shown in FIG. 1, a plurality of positioning protrusions 52 are arranged on the upper plastic member 5, and correspondingly, a plurality of positioning grooves 32 are defined on the terminal 3, thereby better preventing the terminal 3 from being twisted relative to the upper plastic member 5.

Exemplarily, as shown in FIG. 2, the sealing ring 7 is a ring-shaped structure, and an outer contour of the sealing ring 7 is step-shaped. An end of the sealing ring 7 having a smaller outer contour extends into an end of the mounting hole 12 having a smaller diameter, and an end face at an end of the sealing ring 7 having a larger outer contour is attached to the inner side of the cap 1, such that the sealing ring 7 may wrap the cap 1, thereby ensuring a good sealing and insulation effect between the cap 1 and the pole 2.

Exemplarily, as shown in FIGS. 1 and 2, the lower plastic member 6 is circular and attached to the end face on the inner side of the cap 1. In the present embodiment, a size of the lower plastic member 6 is slightly less than that of the cap 1. In this way, on one hand, it is possible to ensure that the cap 1 is smoothly mounted on the shell, and on the other hand, it is also possible to provide a good insulation effect between the cap 1 and conductive components in the shell. Exemplarily, as shown in FIGS. 1 and 2, a side of the lower plastic member 6 facing the end cover 1 defines an avoidance groove 62. The end of the sealing ring 7 having a larger outer contour is accommodated in the avoidance groove 62, thereby ensuring the lower plastic member 6 being well attached to the inner side of the cap 1.

In the present embodiment, as shown in FIG. 1, the cap assembly further includes a current collector 8. A first end of the current collector 8 is electrically connected to the cell of the cylindrical battery, and a second end of the current collector 8 is electrically connected to the pole 2. Exemplarily, the first end of the current collector 8 is welded to the cell, and the second end of the current collector 8 defines a through hole 81 and is sandwiched between the lower plastic member 6 and the pole 2. The pole 2 runs through the through hole 81 defined in the current collector 8, and the current collector 8 is sandwiched between the pole 2 and the lower plastic member 6, to realize the electrical connection between the pole 2 and the current collector 8. The structure is simple and easy to implement.

Exemplarily, as shown in FIGS. 1, 2 and 4, the cap 1 defines a liquid injection hole 11. The cap assembly of the battery further includes a sealing pin 4. The sealing pin 4 is able to seal the liquid injection hole 11. The sealing pin 4 has a thinning region having an explosion-proof function. It should be noted that, the thinning region refers to the region having a thickness thinner than a thickness of each portion of the rest region. When an internal pressure of the cylindrical battery is too high, the thinning region is firstly cracked, such that the pressure may be relieved, thereby avoiding the explosion of the cylindrical battery.

The cap assembly of the battery according to some embodiments, by setting the thinning area on the sealing pin 4 configured to seal the liquid injection hole 11, the sealing pin 4 may have a function of an explosion-proof valve. On one hand, it's unnecessary to additionally arrange an explosion-proof valve on the cap assembly, which reduces the number of components, thereby reducing cost and improving a production efficiency of the cap assembly. On the other hand, it's unnecessary to additionally define the mounting hole 12 on the cap 1 to mount the explosion-proof valve, which can not only further improve the production efficiency of the cap assembly, but also leave a large arrangement space for the liquid injection hole 11 on the cap 1, such that the liquid injection hole 11 has a diameter large enough, thereby ensuring the stability of the liquid injection process. The cylindrical battery of the present embodiment, by arranging the cap assembly of the battery as described above, has a simple manufacturing process, a high production efficiency, and a low cost, and the liquid injection process has a good stability, thereby ensuring a good performance. The battery pack of the present embodiment, by setting the cylindrical battery as described above, has a high production efficiency, a low cost, and a good performance.

Exemplarily, the thickness of the thinning region is not more than (, i.e., less than or equal to) 0.2mm. When the thickness of the thinning region is within the above range, it may ensure that the thinning region will be cracked in time in response to the internal pressure of the cylindrical battery being greater than a safe range, and ensure the safety of the cylindrical battery. The above range of the thickness of the thinning region is only a preferable range and but is not a limitation to the range of the thickness of the thinning region. During the actual design, the thickness of the thinning region may also be set in combination with parameters such as a material of the sealing pin 4, a preset safety pressure of the cylindrical battery, or the like, which is not specifically limited herein.

Exemplarily, as shown in FIGS. 2 and 4, a position of the lower plastic member 6 facing or corresponding to the liquid injection hole 11 further defines an avoidance hole 61. The avoidance hole 61 has a diameter not less than (i.e., greater than or equal to) the diameter of the liquid injection hole 11. The arrangement of the avoidance hole 61 may ensure that the electrolyte may flow smoothly into the cell when the liquid is injected into the cylindrical battery, thereby ensuring that the liquid injection process is smooth.

In the present embodiment, as shown in FIGS. 4 and 5, the sealing pin 4 defines a notch 41, and a position of the sealing pin 4 corresponding to the notch 41 forms the thinning region. Defining the notch 41 makes it easier to achieve the thinning of the sealing pin 4. In the present embodiment, the notch 41 is defined on the outer side of the sealing pin 4, which is more convenient for processing. In other embodiments, the notch 41 may also be defined on the inner side of the sealing pin 4. In some other embodiments, the thinning region on the sealing pin 4 may also be implemented as a recess and the like, which is not limited herein.

Exemplarily, as shown in FIG. 5, the sealing pin 4 defines two notches 41, and the two notches 41 are intersected with each other. An intersection of the two notches 41 forms a continuous thinning region. When the internal pressure of the cylindrical battery is greater than a preset value, the intersection of the two notches 41 is prone to be cracked first, and the crack gradually extends around the intersection along the notches 41, to ensure the reliability of the explosion-proof structure. In other embodiments, the specific number and shapes of the notches 41 are not limited herein, and may be selected as needed.

Exemplarily, as shown in FIG. 4, the sealing pin 4 further defines a recess 42. The recess 42 is defined opposite to the notch 41. The recess 42 is located on one of the inner side and the outer side of the sealing pin 4 while the notch 41 is located on the other of the inner side and the outer side of the sealing pin 4. Besides, the recess 42 is disposed directly opposite to the notch 41. In the present embodiment, the notch 41 is located on the outer side of the sealing pin 4, and the recess 42 is located on the inner side of the sealing pin 4. On one hand, defining the recess 42 is convenient to control the thickness of the thinning region in the range that is easy to break or crack; on the other hand, an edge region of the sealing pin 4 have a thickness great enough. In this way, it is possible to ensure that the sealing pin 4 has a sufficient area cooperating with the liquid injection hole 11, and ensure the good sealing effect of the sealing pin 4.

In the present embodiment, the sealing pin 4 is connected to the cap 1 by welding, which is convenient to ensure a good sealing between the sealing pin 4 and the cap 1. For example, the welding may be laser welding.

Exemplarily, as shown in FIG. 4, the liquid injection hole 11 is a stepped hole. An end of the stepped hole having a greater diameter faces the outer side of the cap 1, and the sealing pin 4 is sealed to the end of the stepped hole having a greater diameter. An end face at an end of the stepped hole having a smaller diameter may limit a position of the sealing pin 4 in an axial direction, so as to ensure an accuracy of the position of the sealing pin 4. Exemplarily, as shown in FIG. 4, an inner wall surface of the end of the stepped hole having a greater diameter is a tapered surface. From the outer side to the inner side, a diameter of the tapered surface gradually decreases. A peripheral wall surface of the sealing pin 4 is also a tapered surface. By arranging the wall surface of the stepped hole and the wall surface of the sealing pin 4 matched with and cooperated with each other as tapered surfaces, when placing the sealing pin 4 into the stepped hole from the outer side to the inner side, it may ensure that the peripheral wall surface of the sealing pin 4 is in full contact with the inner wall surface of the stepped hole, thereby further improving the sealing effect of the sealing pin 4.

## Claims

1. A cap assembly of a battery, comprising:
a cap (1), defining a liquid injection hole (11);
a pole (2), disposed on a first side of the cap (1);
a terminal (3), disposed on a second side of the cap (1) and electrically connected to the pole (2), wherein the second side of the cap (1) is opposite to the first side of the cap (1); and
a sealing pin (4), configured to seal the liquid injection hole (11), and having a thinning region configured for an explosion-proof function.

2. The cap assembly of the battery as claimed in claim 1, wherein a thickness of the thinning region is less than or equal to 0.2mm.

3. The cap assembly of the battery as claimed in claim 1, wherein the sealing pin (4) defines a notch (41), and a position of the sealing pin (4) corresponding to the notch (41) forms the thinning region.

4. The cap assembly of the battery as claimed in claim 1, wherein the sealing pin (4) defines two notches (41), and the two notches (41) are intersected with each other.

5. The cap assembly of the battery as claimed in claim 3, wherein the sealing pin (4) further defines a recess (42), the recess (42) is located at one of two opposite sides of the sealing pin (4), the notch (41) is located at the other of two opposite sides of the sealing pin (4), and the recess (42) is disposed directly opposite to the notch (41).

6. The cap assembly of the battery as claimed in claim 1, wherein the liquid injection hole (11) is a stepped hole, one end of the stepped hole having a greater diameter faces the second side of the cap (1), and the sealing pin (4) is sealed to the end of the stepped hole having a greater diameter.

7. The cap assembly of the battery as claimed in claim 6, wherein an inner wall surface at the end of the stepped hole having a greater diameter is a tapered surface, a diameter of the tapered surface gradually decreases along a direction from the second side of the cap (1) to the first side of the cap (1), and a peripheral wall surface of the sealing pin (4) is a tapered face.

8. The cap assembly of the battery as claimed in claim 1, wherein the sealing pin (4) is welded to a hole wall of the liquid injection hole (11).

9. The cap assembly of the battery as claimed in any one of claims 1-8, wherein the cap (1) defines a mounting hole (12), and the cap assembly of the battery further comprises:
an upper plastic member (5), disposed between the cap (1) and the terminal (3);
a lower plastic member (6), disposed between the pole (2) and the cap (1); and
a sealing ring (7), disposed in the mounting hole (12) and abutting against both the upper plastic member (5) and the lower plastic member (6), wherein the pole (2) successively runs through the lower plastic member (6), the sealing ring (7), and the upper plastic member (5), and is further connected to the terminal (3).

10. The cap assembly of the battery as claimed in claim 9, wherein the lower plastic member (6) defines an avoidance hole (61) at a position opposite to the liquid injection hole (11), and the avoidance hole (61) has a diameter less than or equal to that of the liquid injection hole (11).

11. The cap assembly of the battery as claimed in claim 9, wherein the terminal (3) defines a limiting groove (31) at one end away from the cap (1), a first end of the pole (2) close to the first side of the cap (1) is arranged with a first flange (21), a second end of the pole (2) close to the second side of the cap (1) is arranged with a second flange (22), the first flange (21) abuts against the lower plastic member (6), and the second flange (22) is engaged into the limiting groove (31).

12. The cap assembly of the battery as claimed in claim 9, wherein one of a side wall of the upper plastic member (5) facing the terminal (3) and a side wall of the terminal (3) facing the upper plastic member (5) is arranged with a positioning protrusion (52), the other of the side wall of the upper plastic member (5) facing the terminal (3) and the side wall of the terminal (3) facing the upper plastic member (5) defines a positioning groove (32), and the positioning protrusion (52) is engaged with the positioning groove (32).

13. The cap assembly of the battery as claimed in claim 9, wherein one of a side wall of the upper plastic member (5) facing the cap (1) and a side wall of the cap (1) facing the upper plastic member (5) is arranged with a protruding portion (51), the other of the side wall of the upper plastic member (5) facing the cap (1) and the side wall of the cap (1) facing the upper plastic member (5) defines a groove portion (13), and the protruding portion (51) is engaged with the groove portion (13).

14. The cap assembly of the battery as claimed in claim 9, further comprising a current collector (8), wherein a first end of the current collector (8) is arranged to be connected to a cell, and a second end of the current collector (8) is electrically connected to the pole (2);
the second end of the current collector (8) is sandwiched between the lower plastic member (6) and the pole (2) and defines a through hole (81), and the pole (2) runs through the through hole (81).

15. A cylindrical battery, comprising:
a cylindrical shell, defining an opening; and
the cap assembly as claimed in any one of claims 1-14, wherein the cap assembly is configured to cover and seal the opening.

16. A battery pack, comprising a plurality of cylindrical batteries as claimed in claim 15.
